# EUROPEAN PATENT SPECIFICATION

(11) **EP 2 206 044 B1**
(45) Date of publication and mention of the grant of the patent: **22.01.2014**
(21) Application number: 07802961.8
(22) Date of filing: 28.08.2007
(51) Int. Cl.: G06F 13/00, G07F 11/00

(54) **AN ELECTRONIC POINT OF SALES VENDING CONTROL APPARATUS**
ELEKTRONISCHE POINT-OF-SALES-VERKAUFSSTEUERVORRICHTUNG
APPAREIL DE GESTION DE TERMINAUX DE PAIEMENT ÉLECTRONIQUE ET DE DISTRIBUTEURS AUTOMATIQUES

(43) Date of publication of application: 14.07.2010
(73) Proprietor: January Patents Limited, Claremorris, County Mayo (IE)
(72) Inventor: CONCANNON, Gerard, County Mayo (IE); CATTIGAN, Michael, Ballaghaderreen County Roscommon (IE); HENRY, John, County Sligo (IE); KENNA, Sean, County Mayo (IE); FORDE, James, County Mayo (IE); FEENEY, Dominic, County Mayo (IE)
(74) Representative: McCarthy, Denis Alexis
(86) International application number: PCT/EP2007/058944
(87) International publication number: WO 2009/026957

(56) References cited:
- EP-A2- 1 152 363
- WO-A-95/05609
- WO-A-97/29446
- CA-A1- 2 505 072
- IE-A1- 20 050 029
- US-A1- 2002 128 988
- LINTHICUM D S: "B2B Application Integration - e-Business-Enable Your Enterprise" B2B APPLICATION INTEGRATION: E-BUSINESS-ENABLE YOUR ENTERPRISE, XX, XX, August 2001 (2001-08), pages 17-30, XP007904497

## Description

The present invention relates to an electronic point of sales (EPOS) vending control apparatus for connecting different types of EPOS systems with different types of vending machines, each type of EPOS system and vending machine having characteristic control inputs.

Electronic point of sales (EPOS) systems are terminals used in place of conventional cash registers to facilitate both cash and card transactions, as well as to fulfil stock control and ordering requirements for retail outlets. The ability for EPOS systems to be networked to a centralised computer system also means that sales information for products and services sold by an outlet can be processed almost immediately.

Irish Patent Publication No. IE20050029 discloses that the functionality of EPOS systems has also been extended to the control of vending machines. In this way products, such as cigarettes, stored in a vending machine coupled with the EPOS system can be dispensed by appropriate interaction of human operators with input means associated with the EPOS system during a transaction. Whereas previously, operators needed to interact with multiple devices to complete a transaction involving both vended products and other products, such functionality enables a transaction to be completed using a single EPOS system.

However, although such advances in EPOS technology are clearly advantageous, significant problems arise. One notable problem follows from the inability for these systems integrate the functionality of different types of EPOS systems. EPOS systems and vending machines each process quite different inputs and as a result the protocols and communication systems normally associated with them are very different. For example, EPOS systems will effectively control a vending machine through signals transmitted via its associated communications ports (such as RS232 or LAN). By comparison, internal control systems for vending machines use EPROM and firmware. Moreover, there are numerous brands, makes and models of EPOS systems available on the market, each having their own respective processing systems and each requiring specific control inputs. Furthermore, different types of EPOS systems will also generate different output signal which are characteristic of the system type. Similar problems also follow for different types of vending machines which will require characteristic control inputs for their control and will produce outputs which are characteristic of the vending machine type. A technical problem thus exists in that it is not possible to integrate the functionality of different types of EPOS systems with different types of vending machines.

EP 1152363 A2 discloses an interface to allow communication between financial transaction systems and financial administration systems, retailer administration systems or the like. The interface allows legacy hardware to communicate in realtime to financial and/or retail administration networks in situations where otherwise incompatible date formats or an inability to communicate with networks and such systems would be the case.

Further problems in present EPOS systems follow from the inability for such systems to provide full accountability for each product dispensed from a vending machine under the control of a particular EPOS system. It will be appreciated that such a lack in traceability of vended products will give rise to significant instances of fraud within outlets, it being widely known that fraud has been a long term problem for retailers who sell small expensive low margin packed products, such as cigarettes, confectionary and razor blades.

Historically, vending initially involved the use stand alone un-manned machines selling small packed products such as confectionary, tobacco products and razor blades. In use, a customer would insert the indicated payment and select the desired product. Although this method of selling provided a relatively secure and safe method for vending, as the vending machine is typically robust and the payment is received before the product was vended, there were no controls on who may obtain products from the vended machine. Accordingly, these systems were accessible by underage persons who are not legally entitled to purchase certain products, notably, tobacco products. These machines also fail to provide full accountability for dispensed products.

In other vending machines, the product is vended before payment is made. In such machines there is significant scope for fraud by customers and by operators. Compounding the problem is the fact that numerous people can be involved in a single transaction and this makes it more difficult for offending persons to be detected. Moreover, such systems do not in any way contribute to preventing the fraud from occurring in the first place. A significant issue arises as operators, although having control of vending machines, do so without any accountability as to products that have been vended. For example, an operator can perform a vend without registering the sale, or can perform multiple vends and only charge for some of them. Another opportunity for fraud arises where an operator may vend a product without paying. Additionally, customers may make erroneous vends and there is no accountability for the vended product. Moreover, erroneously vended products may be stolen by the customer, cashier or any other opportunist who may discover them.

Accordingly, there are numerous occasions which may result in a fraud being committed in such arrangements for vending machines.

Associated with other forms of vending machines are secondary keyboards. These allow the operator to perform the required actions to vend the desired product. In some embodiments the keyboard is connected to an EPOS system. However, these arrangements are also prone to fraud as the EPOS system may be deactivated by operators and this will result in the transaction not being recorded.

It is a therefore an object of the present invention to provide an EPOS vending control apparatus for connecting at least one EPOS system with at least one vending machine which overcomes the above problems and/or which will provide the public and/or industry with a useful alternative.

It is acknowledged that the term 'comprise' may, under varying jurisdictions be provided with either an exclusive or inclusive meaning. For the purpose of this specification, and unless otherwise noted explicitly, the term comprise shall have an inclusive meaning - i.e. that it may be taken to mean an inclusion of not only the listed components it directly references, but also other non-specified components. Accordingly, the term 'comprise' is to be attributed with as broader interpretation as possible within any given jurisdiction and this rationale should also be used when the terms 'comprised' and 'comprising' are used.

Further aspects of the present invention will become apparent form the ensuing description which is given by way of example only.

Accordingly, the invention provides an electronic point of sales (EPOS) vending control apparatus for connecting different types of electronic point of sales (EPOS) systems with different types of vending machines, in accordance with the appended claims.

The present invention provides an arrangement in which standardised control input signals transmitted from the main vending control unit are able to be translated into characteristic signals suitable for supply as control inputs to each type of EPOS system and vending machine connected to the control apparatus. This will enable different types of EPOS system's and vending machines to be integrated for use together. The EPOS vending control apparatus may be configured as a computing server which is locatable either locally within an outlet or remotely, for example at a head office location.

Specifically, the provision of an adaptive EPOS communications interface which translates standardised EPOS control input signals transmitted from the main vending control unit into characteristic EPOS control input signals for transmission to the EPOS system will ensure that the signals carrying control instructions for an EPOS system are in the correct format suited to the particular EPOS system concerned. This will enable the retrofitting of new types of EPOS systems into a retail outlet without having to remove older version EPOS systems.

Similar advantages follow from the provision of the adaptive vending machine communications interface. In particular, translating vending machine control input signals transmitted from the main vending control unit into characteristic vending machine control input signals for the desired vending machine will facilitate dispensing of products from a particular vending machine coupled to the EPOS system via the control apparatus. The adaptive vending machine communications interface will thus facilitate the ability for vending machines of different types to be controlled by an EPOS system coupled to the control apparatus. Furthermore, a vended product can be, and quite often is, part of a basket of various non-vended products in one sale. A vend can thus be made at any stage of the overall transaction.

In another embodiment of the invention, the adaptive EPOS communications interface is further configured to translate characteristic EPOS control output signals transmitted from the EPOS system into standardised EPOS control output signals for processing by the main vending control unit.

Such a provision will enable control output signals received from the EPOS system to be processed by the main vending control unit. In this way, instructions to vend a product from a specific vending machine can be encoded by vending software applications executing on the EPOS system into a characteristic EPOS control output signals for transmission initially to the adaptive EPOS communications interface. At the adaptive EPOS communications interface these characteristic EPOS output signals can be translated into standardised EPOS control output signals for processing by the main vending control unit.

Preferably, the adaptive vending machine communications interface is further configured to translate characteristic vending machine control output signals transmitted from the vending machine into standardised vending machine control output signals for processing by the main vending control unit.

Such a provision will enable control output signals received from the vending machine to also be processed by the main vending control unit.

In another embodiment of the invention, the main vending control unit is connected to a database of interface control programs.

In such an embodiment, an interface control program, when executed on the EPOS communications interface, provides functionality required to generate characteristic EPOS control input signals and to process characteristic EPOS control output signals for an EPOS system.

In a further an embodiment, another of said interface control programs, when executed on the vending machine communications interface, provides functionality required to generate characteristic vending machine control input signals and to process characteristic vending machine control output signals for a vending machine.

Preferably, associated with the database of interface control programs is an EPOS configuration file which stores configuration parameters which are provided as input to the interface control programs.

Preferably, the interface control programs are arranged in the database in a dynamic linked library structure.

Such a structure will ensure that all of the EPOS systems and vending machines that are integrated with the EPOS vending control apparatus can share the code associated with each control program and any configuration parameters.

In another embodiment of the invention, the EPOS vending control apparatus further comprises means for sampling characteristic EPOS control output signals for an EPOS system on connection to the EPOS vending control apparatus, and means for extracting EPOS system identification parameters from the sampled EPOS signals.

Preferably, the EPOS vending control apparatus uses the EPOS system identification parameters to select and write an interface control program to the adaptive EPOS communications interface to facilitate processing of characteristic EPOS control output signals received from the EPOS system and generating characteristic EPOS control input signals for the EPOS system.

In another embodiment of the invention, the EPOS vending control apparatus further comprises means for sampling characteristic vending machine control output signals for a vending machine on connection to the EPOS vending control apparatus, and means for extracting vending machine identification parameters from the sampled vending machine signals.

Preferably, the EPOS vending control apparatus uses the vending machine identification parameters to select and write an interface control program to the adaptive vending machine communications interface to facilitate processing of characteristic vending machine control output signals received from the vending machine and generating characteristic vending machine control input signals for processing by the vending machine.

In another embodiment of the invention, the adaptive EPOS communications interface and the adaptive vending machine communications interface are stored on the control apparatus.

Preferably, the adaptive communications interfaces each comprise means for extracting point of sales terminal data and/or vending machine data from the characteristic EPOS control output signals received from the EPOS systems and/or the characteristic vending machine control output signals received from vending machines coupled to the control apparatus.

Preferably, the extracted point of sales device data and/or vending machine data is transmitted to the main vending control unit.

In another embodiment of the invention, the main vending control unit is connected to at least one hub computer via a further communications link for the transmission of the point of sales data and vending machine data.

Preferably, the point of sales data and vending machine data includes data relating to transactions including both products vended from a vending machine and other non-vended products in a transaction.

In another embodiment of the invention, the point of sales data and vending machine data transmitted from the main vending control unit is time and/or date stamped according to the time and date of the transaction.

Preferably, the hub computer is able to process the point of sales data and vending machine data into reports detailing sales activity and/or the dispensing activity of one or more vending machines.

Such reports may be related to failed vend requests and will enable operators as well as head office personnel to react quickly to hardware problems with vending machines. The reports will highlight problems with vending machines where particular columns or slots give vend failures and they will also highlight problems with vending machines that fail to vend any product.

In another embodiment of the invention, an operator must input authentication information to an EPOS system in order to operate and gain access to the functionality of the EPOS system.

By requiring an operator to input authentication information the apparatus ensures that one person is fully accountable for all vends originating from a particular EPOS system. Such a provision ensures that there is one point of access and includes a verifiable audit trail.

Preferably, authentication of an operator involves the operator inputting a password into a login or verification routine running on an EPOS system. Alternatively, authentication of an operator involves the operator passing a swipe card through a reader associated with the EPOS system, whereby the required verification information is obtainable from the swipe card by the reader and then transmitted to the EPOS system. Authentication may also include biometric methods, such as finger print readers or iris scanning technologies.

In another embodiment of the invention, instructions for the vending machine to dispense a product for a transaction are initially encoded in a characteristic EPOS control output signal transmitted from an EPOS system connected to the control apparatus.

Preferably, each EPOS system operates a vending machine control application which provides an interactive interface on the EPOS system from which operators can select a product to be dispensed from a vending machine.

Preferably, the EPOS system comprises a touch screen and the interactive interface is icon based, each product able to be dispensed from the vending machine being represented as an icon on the touch screen.

Use of a touch screen will also enable management to configure the touch panels on the EPOS system with all information corresponding to the layout of the columns and/or slots in a vending machine.

In this way the EPOS system that has complete control of the vend process.

Alternatively, an EPOS system comprises a keyboard and each product is able to be dispensed from the vending machine by pressing a predefined key on the keyboard.

Preferably, in the event that a specific vending machine is unable to vend a requested product the vend request is directed to an alternative vending machine to dispense the requested product. Thus, if a vending machine is faulty or out of stock the initial vend request can be directed to another vending machine connected to the EPOS vending control apparatus which is capable of fulfilling the vend request.

Preferably, before the costs for the dispensed product are added to a customer invoice the EPOS system must receive a characteristic EPOS control input signal encoding a confirmation that the vending machine has dispensed the product.

Preferably, when such a confirmation is received it is rendered on display means associated with the EPOS system.

The EPOS system thus not only issues signals to the vending machine to vend a particular product when instructed to do so by the operator, but also waits for confirmation of a successful vend before it adds the cost of the product to the customers transaction invoice. Each vend operation is therefore recorded, but more significantly is recorded against a single authenticated operator.

Preferably, each vend from a vending machine is recorded against the operator issuing the vend instruction from the EPOS system.

In another embodiment of the invention, the EPOS system comprises customer age verification functionality.

The provision of age verification functionality on the EPOS system will prompt the operator to get the customer to verify their age before allowing a transaction to proceed. When an operator requests that the vending machine vend a product, the EPOS system will prompt the operator to confirm and then record the confirmation that the customer is old enough to purchase the desired goods.

Preferably, the customer age verification functionality involves each EPOS system issuing a visual prompt on the display means instructing the operator to request a customer to produce age verification. Such age verification may be provided as an identity card.

Alternatively, the customer age verification functionality involves scanning a card encoding the age of the customer. Preferably, the EPOS system is adapted to store details relating to age verification of a customer.

In another embodiment of the invention, the EPOS system maintains a personal details database comprising personal details of each operator. Preferably, access to functionality on each EPOS system needed to vend specific products from a vending machine is controllable according to personal details of the operator in the database.

Preferably, the main control unit receives data relating to all vended products once they have been dispensed from the vending machine.

In another embodiment of the invention, the main vending control unit comprises means to monitor the quantity of each product in a vending machine.

Preferably, the main vending control unit comprises means to transmit alerts in response to signals received from the vending machine indicating that levels of product remaining in the vending machine are below a minimum specified level.

Preferably, such alerts are in the form of a prompt on an EPOS system, a simple messaging service (SMS) text message and/or an e-mail message.

In another embodiment of the invention, the main vending control unit is adapted to transmit status information to a web-server to facilitate online remote monitoring of vending machines in a single or multiple locations.

In another embodiment of the invention, touch panels associated with an EPOS system are configurable to present a graphical representations corresponding to the physical layout of products in the vending machine.

Preferably, an EPOS operator will be able to select a product to be vended by touching a graphical representation on the touch screen corresponding to the product.

### Detailed Description of the Invention

The invention will be more clearly understood from the following description of some embodiments thereof, given by way of example only, with reference to the accompanying drawings, in which:
Fig. 1 is a schematic view of an EPOS vending control apparatus according to the present invention;
Fig. 2 is a schematic views of an alternative configuration of EPOS systems and vending machines for use according to the present invention;
Fig. 3 is a schematic view of a further alternative configuration of EPOS systems and vending machines for use according to the present invention;
Fig. 4 is a schematic view of a still further alternative configuration of EPOS systems and vending machines for use according to the present invention;
Fig. 5 is a schematic view of a number of EPOS systems connected to a hub computer via the EPOS vending control apparatus configured according to the present invention;
Fig. 6 is a schematic view showing the connectivity of a number of outlets to the hub computer via a network,
Fig. 7 is the first part of a flow diagram showing the steps in a process for vending a product according to the invention;
Fig. 8 is the second part of the flow diagram shown in Fig. 7;
Fig. 9 is a further flow diagram showing the steps in a process for vending a product according to the invention;
Figs. 10 and 11 show optional drop down menu functionality of an EPOS system connected the EPOS vending control apparatus shown in Fig. 1, and
Figs. 12 to 15 show sample reports which are able to be generated by the hub computer from point of sales and vending machine data according to the present invention.

For the purposes of the foregoing description, the term "operator" should be understood to mean a person in an outlet who interacts with an EPOS system in order to initiate vends from vending machines, total the amount due for the purchase of products and/or services from the outlet, charges the customer for the amount and processes a card or cash transaction by way of payment for the purchase.

The term "characteristic" in the context of input and output signals should be understood to mean signals which are capable of being processed or generated by a specific EPOS system or vending machine. For example, a characteristic vending machine control input signal will be understood as being an input signal which is able to be supplied as input to a specific vending machine in the EPOS network so as to direct and control specific functionality at that vending machine. A characteristic vending machine control input signal capable of being supplied as input to one type of vending machine will not be suitable for supply as input to another type of vending machine. Similarly, a characteristic EPOS control output signal will be understood as being an output signal transmitted from a specific EPOS system. Different EPOS system will thus produce different characteristic EPOS control output signals

The term "standardised" in the context of input and output signals should be understood to mean generic signals which are in a format capable of being processed or generated by the main vending control unit of the present invention. Specifically, the characteristic signals output by the various types of EPOS systems and vending machines connected to the control apparatus must first be translated into a standardised format able to be interpreted by the control apparatus

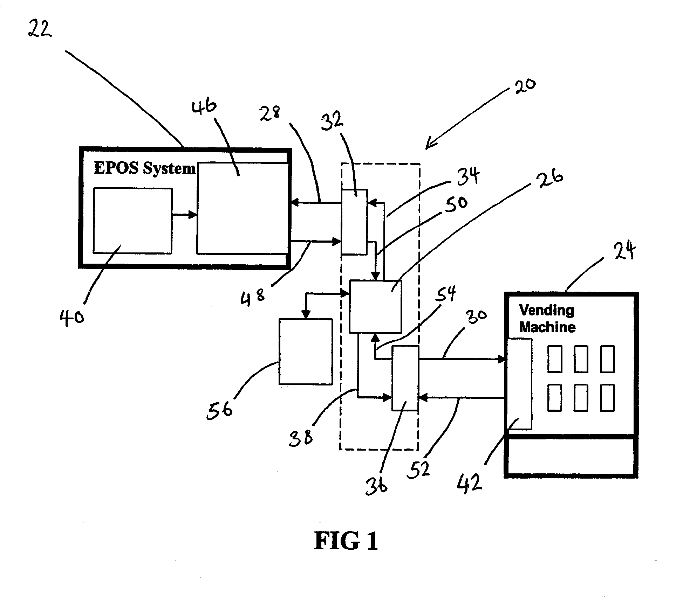

Referring to the drawings, and initially to Fig. 1, there is shown an EPOS vending control apparatus, indicated generally by the reference numeral 20, for connecting different types of electronic point of sales (EPOS) systems 22 with different types of vending machines 24. The control apparatus 20 comprises a main vending control unit 26 which is connected to at least one vending machine 24, and at least one EPOS system 22, by a communications link 28 for the transmission of characteristic EPOS control input signals for controlling the EPOS system 22 and a communications link 30 for transmitting characteristic vending machine control input signals for controlling the vending machine 24 from the EPOS system 22.

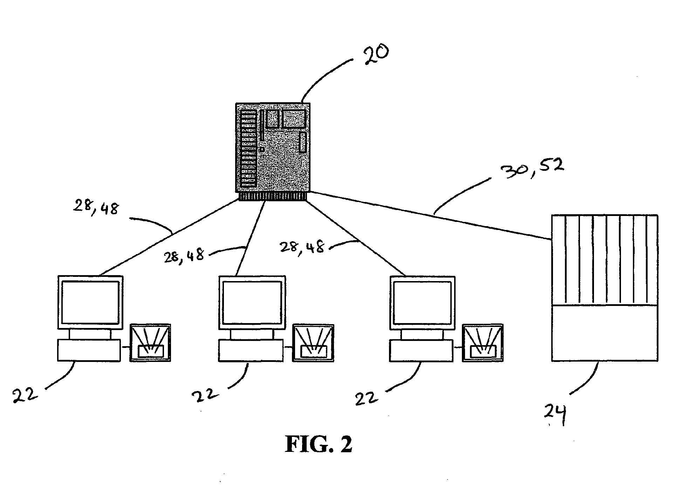

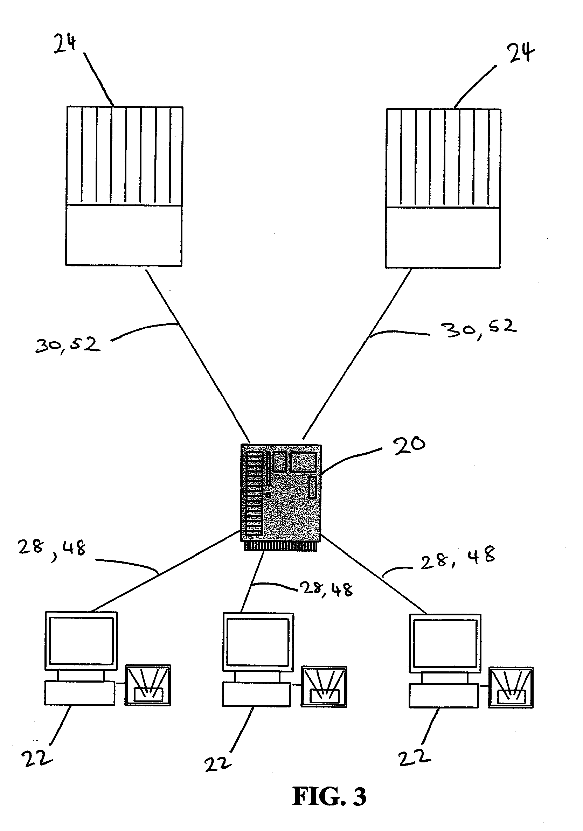

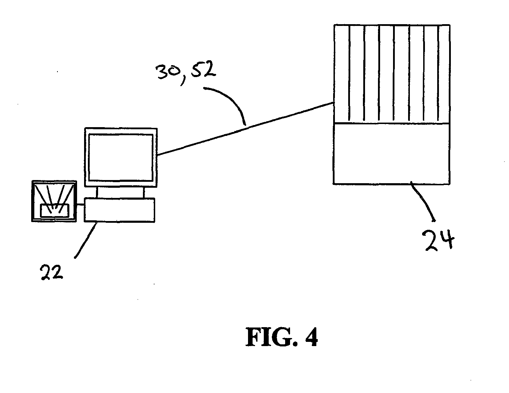

Although Fig. 1 shows a single EPOS system 22 being connected via the main vending control unit 26 to the vending machine 24, it will be appreciated that the present invention is configurable to integrate the functionality of any number of EPOS systems 22 with any number of vending machines 24. For example, and referring briefly to Fig. 2, shown is an arrangement in which multiple EPOS systems 22 are connected to a single vending machine 24 via the control apparatus 20. Fig. 3 shows the configuration of Fig. 2 in which multiple vending machines 24 are coupled to the control apparatus 20. Fig. 4 shows another possible arrangement in which the control apparatus 20 is integrated with an EPOS system 22 into a single machine and connected to a vending machine 24. Although not shown, further configurations may include a single main vending control unit integrated onto a single EPOS system and being interfaced to multiple vending machines. Another configuration may also include multiple vending control units for redundancy. It will therefore be understood that numerous configurations for EPOS systems and vending machines are contemplated by the present invention and are not limited to that shown in Fig. 1.

Referring again to Fig. 1, the control apparatus 20 operates an adaptive EPOS communications interface 32 for translating standardised EPOS control input signals transmitted from the main vending control unit 26 via communication link 34 into characteristic EPOS control input signals for transmission to the EPOS system 22 via communications link 28. Also shown is an adaptive vending machine communications interface 36 for converting standardised vending machine control input signals transmitted from the main vending control unit 26 via communications link 38 into characteristic vending machine control input signals for transmission to the vending machine 24 via communications link 30.

The EPOS system 22 comprises processing means 40 and the vending machine 24 comprises processing means 42. Executing on the main vending control unit 26 is vending control server software which can be deployed with connectivity to both the EPOS system 22 and the vending machine 24 via the communications interfaces 32, 36. Various software based library modules are able to be deployed at the main vending control unit 26. The vending control server software may be deployed on a LAN or via a TCP/IP connection or directly on the main vending control unit 26.

Associated with the EPOS system 22 is an application programming interface 46 (API) which not only facilitates communications between the EPOS vending control apparatus 20 and the EPOS system 22, but also enables a developer to add vending processing functionality to the EPOS system 22. This functionality is aided by number of software modules associated with the application programming interface 46 which are organised in a dynamic linked library structure. Such a dynamic linked library encapsulates the signal construction and deconstruction processes at the EPOS system 22, and also a configuration file which holds such details as the modes of communication available to the EPOS system 22, such as whether the communication should be file based (FTP), TCP/IP or by wireless communications.

The adaptive EPOS communications interface 32 is further configured to translate characteristic EPOS control output signals transmitted from the EPOS device via communications link 48 into standardised EPOS control output signals which are transmitted via communications link 50 for processing by the main vending control unit 26. Similarly, the adaptive vending machine communications interface 36 is further configured to translate characteristic vending machine control output signals transmitted from the vending machine via communications link 52 into standardised vending machine control output signals, which are transmittable via communications link 54 for processing by the main vending control unit 26. The adaptive EPOS communications interface 28 and the adaptive vending machine communications interface 36 are stored on the control apparatus 20, although it will be appreciated that other configurations are also possible.

An operator (not shown) must initially input authentication information to an EPOS system 22 in order to operate and gain access to its functionality. Such authentication may involve the operator inputting a password into a login or verification routine running on EPOS system 22. Alternatively, authentication of an operator may involve the operator passing a swipe card through a reader associated with the EPOS system 22, whereby the required verification information is obtainable from the swipe card and then transmitted to the EPOS system 22. It will be understood that each vend from a vending machine 24 is recorded against the operator issuing a vend instruction from a specific EPOS system 22.

Each EPOS system 22 comprises customer age verification functionality and such functionality may involve each EPOS system 22 generating a visual prompt on the display means instructing the operator to request a customer to produce age verification. Such age verification may be an identity card. The customer age verification functionality may also involve scanning a card associated with the customer encoding the age of the customer. The EPOS system 22 may also be adapted to store details relating to age verification of a customer, and may also maintain a personal details database comprising personal details of each operator. Additionally, access to functionality on each EPOS system 22 needed to vend specific products from a vending machine 24 is controllable according to personal details of the operator in the database.

A vending machine control application operating on each EPOS system 22 is configured to generate an interactive interface on the EPOS system 22 from which operators can select a product to be dispensed from a vending machine 24. Each EPOS system 22 may also comprise a touch screen and the interactive interface is icon based so that each product able to be dispensed from the vending machine 24 is represented as an icon on the touch screen. The touch panels associated with an EPOS system 22 are configurable to present graphical representations corresponding to the physical layout of products in the vending machine 24 so that an operator will be able to select a product to be vended by touching a graphical representation on the touch screen corresponding to the product. Furthermore, icons representing each individual vending machine 24 which is able to receive a vending instruction from an EPOS system 22 connected to the main vending control unit control apparatus 20 may be displayed on display means associated with the EPOS system 22. In this way an operator is able to quickly identify a product to be vended by initially selecting the required vending machine 24 which is adapted to dispense the required product.

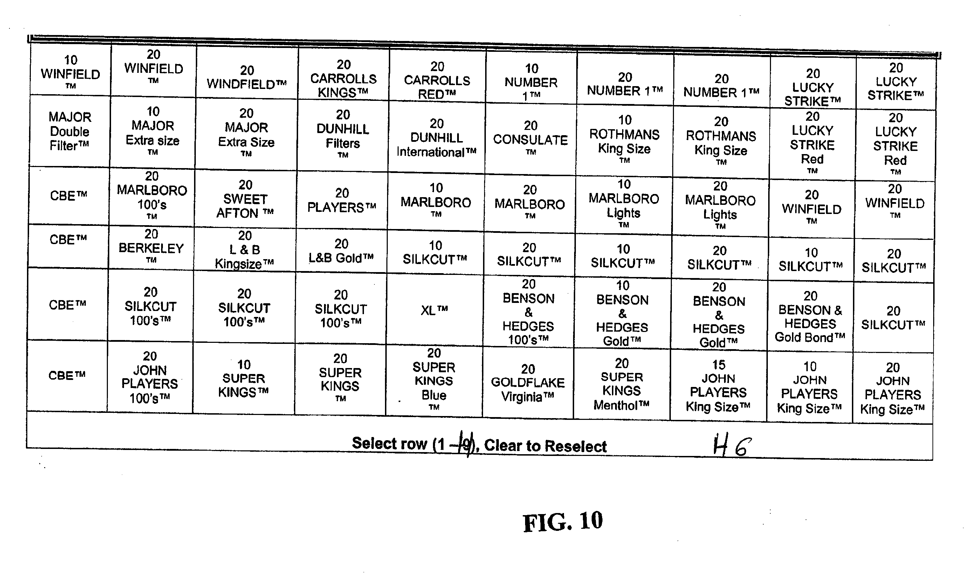

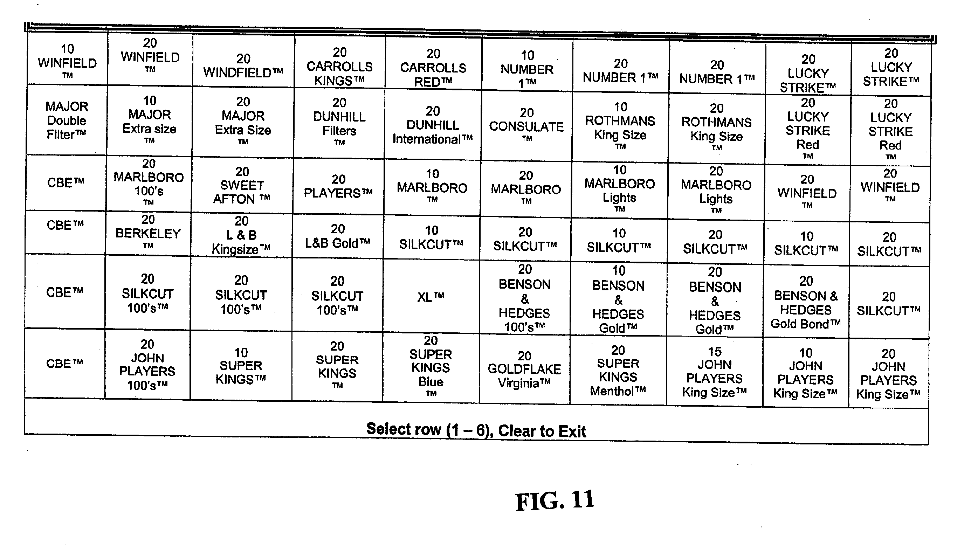

Figs. 10 and 11 show representations of drop down menus which may also be provided on display means associated with each EPOS system 22 according to the invention. Such drop down menus will enable an operator to avoid having to scroll through lists of vendible products on the display means or touch screen. In operation, the operator presses the required button on the keyboard, or an icon on a touch screen, corresponding to a category of products, such as cigarettes. Once selected, the screen shown in Fig. 10 is displayed. The operator may select the relevant row by pressing the number corresponding to that row. This then activates the screen shown in Fig. 11. The operator then selects the relevant column by pressing the number corresponding to that column. The process to then dispense that selected product from the vending machine is then activated.

From the EPOS system 22 operators are thus able to maintain complete control of the vend process. Conversely, the EPOS system 22 comprises a keyboard and each product is able to be dispensed from the vending machine 24 by pressing a predefined key on the keyboard. Before the costs for the dispensed product are added to a customer invoice the EPOS system 22 must receive a characteristic EPOS control input signal encoding a confirmation that the vending machine has dispensed the product. Preferably, such a confirmation is displayed on display means associated with the EPOS system 22.

The adaptive EPOS communications interface 32 and the adaptive vending machine communications interface 36 are coupled, via the main vending control unit 26, to a database 56 of interface control programs.

Such interface control programs, when executed on the EPOS communications interface, may provide functionality required to generate characteristic EPOS control input signals and to process characteristic EPOS control output signals for an EPOS system. Other of said interface control programs, when executed on the vending machine communications interface, may provide the functionality required to generate characteristic vending machine control input signals, and to process characteristic vending machine control output signals for a vending machine.

Associated with the database 56 of interface control programs is an EPOS configuration file which stores configuration parameters which are provided as input to the interface control programs. The interface control programs are arranged in the database 56 in a dynamic linked library structure.

The EPOS vending control apparatus 20 further comprises means for sampling characteristic EPOS control output signals for an EPOS system 22 on connection to the EPOS vending control apparatus 20. Also provided is means for extracting EPOS system identification parameters from the sampled EPOS signals. In this way the EPOS vending control apparatus 20 uses the extracted EPOS system identification parameters to select and write an interface control program to the adaptive EPOS communications interface 32 to facilitate processing of characteristic EPOS control output signals received from the EPOS system 22 and generating of characteristic EPOS control input signals for processing by the EPOS system 22.

Similarly, the EPOS vending control apparatus 20 further comprises means for sampling characteristic vending machine control output signals for each vending machine connected to the EPOS vending control apparatus 20. Means are also provided for extracting vending machine identification parameters from the sampled vending machine signals. The EPOS vending control apparatus 20 can then use the vending machine identification parameters to select and write an interface control program to the adaptive vending machine communications interface 36 to facilitate processing of characteristic vending machine control output signals received from the vending machine 24 and generating characteristic vending machine control input signals for processing by the vending machine 24.

The adaptive communications interfaces 32, 36 each comprise means for extracting point of sales data and vending machine data from the characteristic output signals received from the EPOS systems 22 and/or the vending machines 24. Once extracted the point of sales device data and vending machine data is transmitted to the main vending control unit 26.

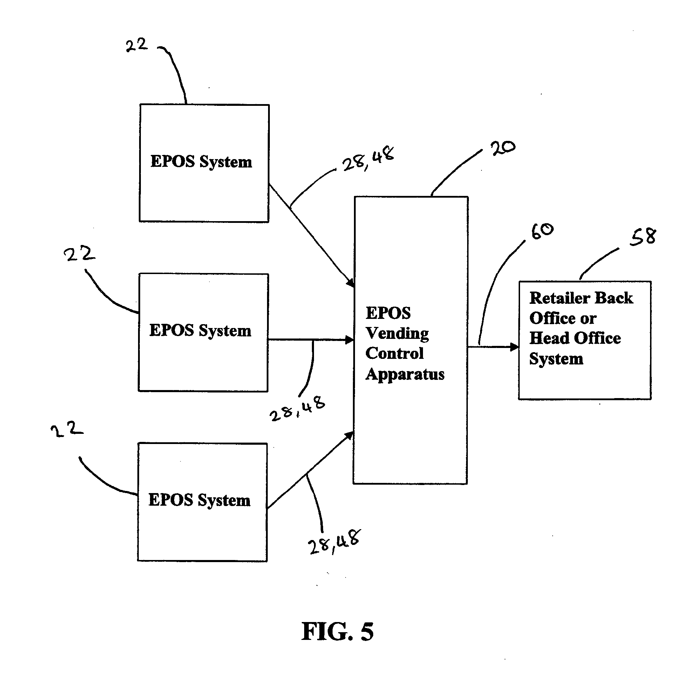

As shown in Fig. 5, the control apparatus 20 is connected to at least one hub computer 58 via a further communications link 60 for the transmission of the point of sales data and vending machine data extracted from the characteristic output signals. It will be understood that the point of sales data and vending machine data includes data relating to transactions including both products vended from a vending machine 24 and other non-vended products in a transaction. The main control unit 26 thus receives data relating to all vended products once they have been dispensed from the vending machine 24. The point of sales data and vending machine data transmitted from the main vending control unit 26 is time and/or date stamped according to the time and date of the transaction.

The main vending control unit 26 further comprises means to monitor the quantity of each product in a vending machine 24, as well as means to transmit alerts in response to signals received from a vending machine 24 indicating that levels of a product are below a minimum specified level. Such alerts may be in the form of a prompt on an EPOS system 22, a Simple Message Service (SMS) text message and/or an e-mail message.

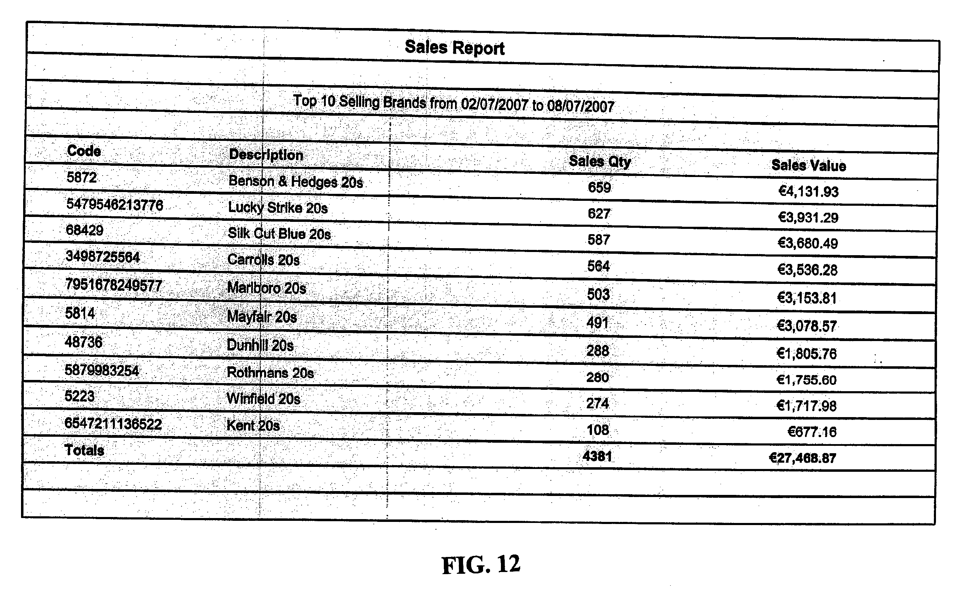

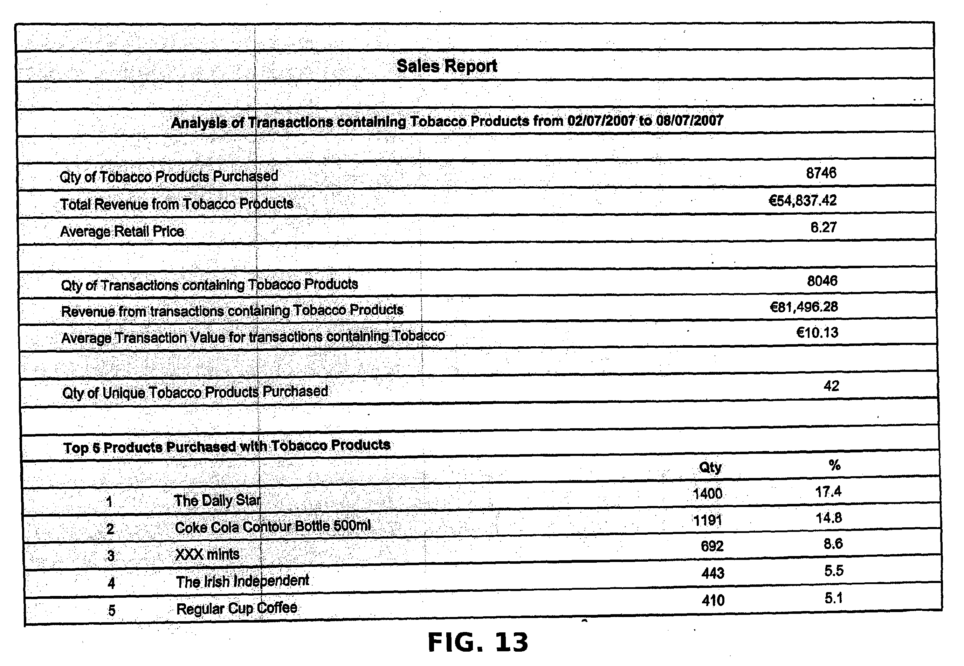

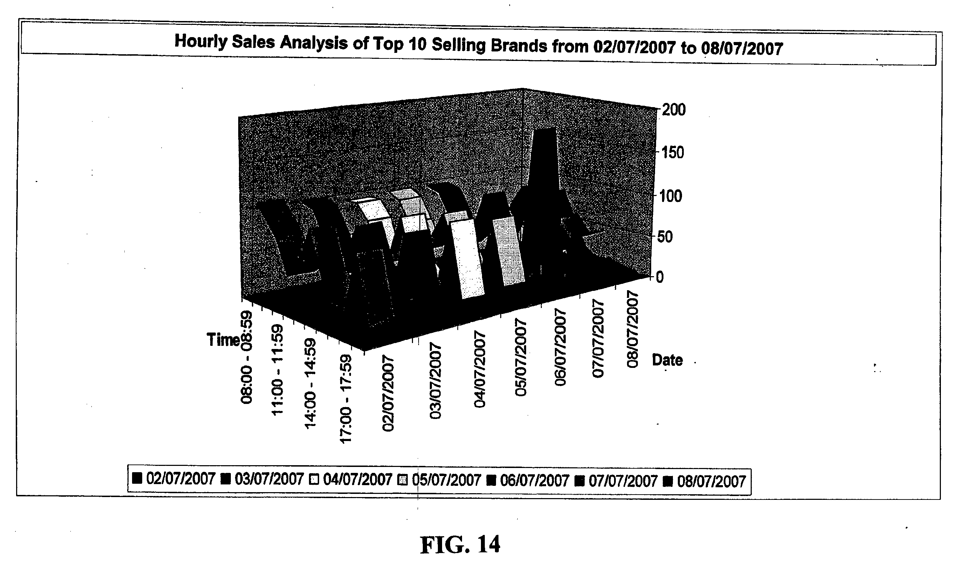

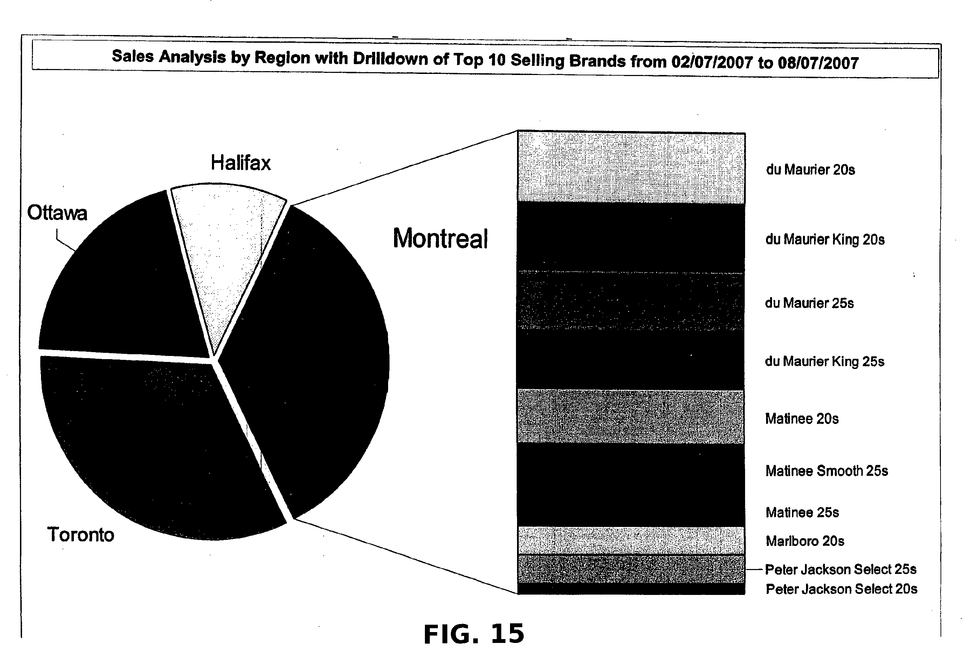

The hub computer 58 is also able to process the point of sales data and vending machine data into reports detailing the dispensing activity of individual vending machines 24, as well as a collective group of vending machines 24 located at the same location or at multiple remote locations. Figs. 12 to 15 show examples of reports which are able to be generated at the hub computer 58.

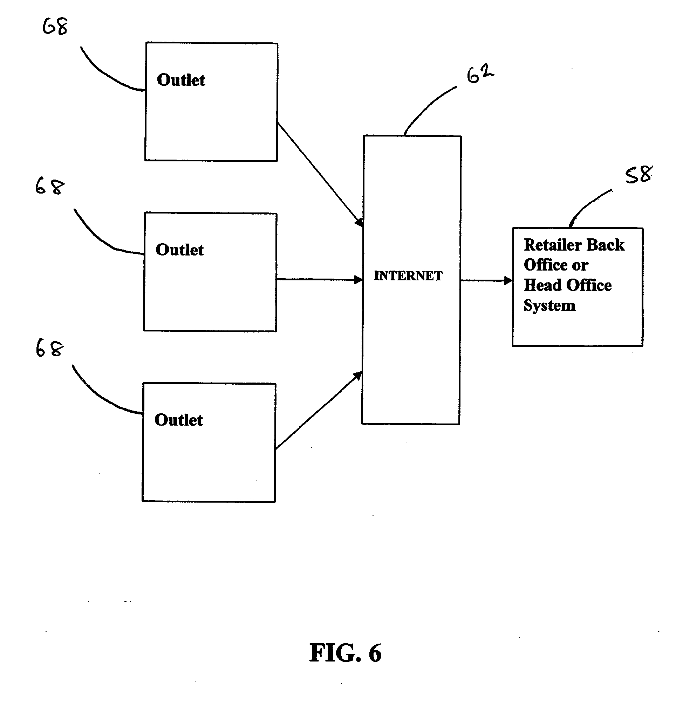

Fig. 6 shows a configuration in which outlets 68 are able to connect to the hub computer 58 via a network such as the Internet 62 to facilitate online remote monitoring of vending machines in a single or multiple locations. The vending machines 24 will also have the ability to send a "Current Status Update" to a designated web server which will enable the constant online remote monitoring of all vending machines in various locations throughout a specified territory or country.

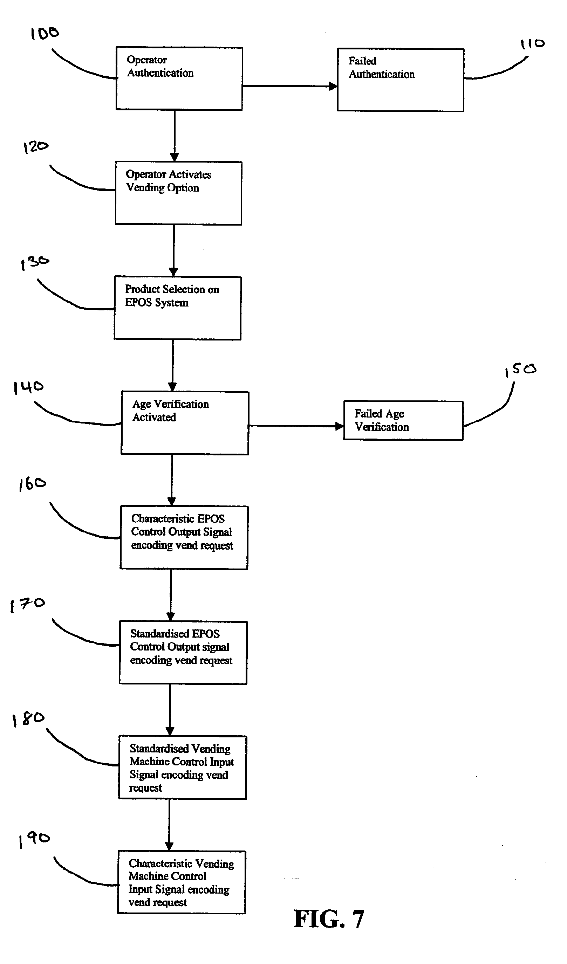

Fig. 7 is the first part of a flow diagram showing a process for vending a product from a vending machine. At step 100, the EPOS operator authenticates him or herself to the EPOS system. A failed authentication attempt by the EPOS operator will, at step 110, result in the operator being blocked from having access to functionality of the EPOS system. At step 120, an EPOS operator, in response to a request received from a customer wanting to purchase a product in a vending machine, activates a vending option on the EPOS system. Such a vending option will enable the operator to identify the product to be vended on display means associated with the EPOS system. At step 130, the operator selects the product to be vended by appropriate interaction with input means associated with the EPOS system. Such input means may be a touch screen displaying images of icons representing various products able to be dispensed by the vending machines which are connected to the EPOS system. Alternatively, input means may be provided by a keyboard, whereby an operator is able to use the keyboard to perform the required selection. At step 140, and for certain categories of products for which proof of age is required for purchase, age verification functionality on the EPOS system is activated. This verifies that the operator is the required age to vend the particular product and also, on confirmation that the operator is permitted to sell the product, prompts the operator to request that the customer verify their age before allowing the vend to proceed. The EPOS system will thus prompt the operator to verify their age and input a confirmation that the customer is old enough to purchase the desired goods. At step 150, if the customer is not the required minimum age, or if an operator has failed to produce the required age verification input for the customer, the vend will not proceed.

At step 160, the EPOS system encodes the selection by the operator into a vend request and transmits the vend request as a characteristic EPOS control output signal to the adaptive EPOS communications interface at the control apparatus. At step 170, the adaptive EPOS communications interface converts the characteristic EPOS control output signal into a standardised EPOS control output signal which is able to be processed by the main vending control unit. At step 180, the standardised EPOS control output signal generated at step 170 is converted into a standardised vending machine control input signal. At step 190, the vending machine control input signal is transmitted to the adaptive vending machine communications interface where it is converted into a characteristic vending machine control input signal which is suitable for processing by the vending machine and encodes the original vend instruction issued by the operator at the EPOS system to dispense the desired product.

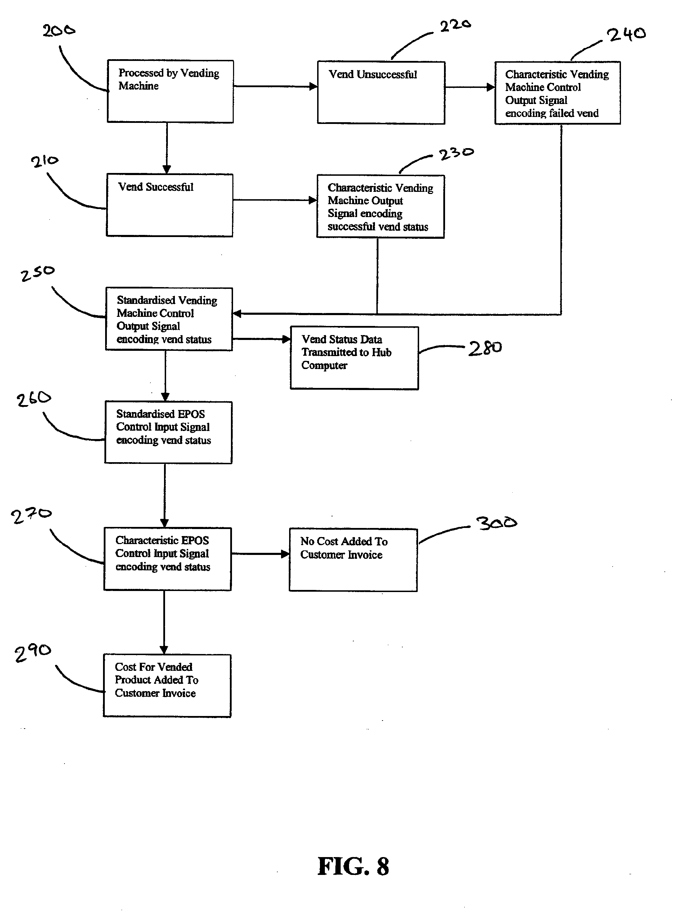

Fig. 8 shows the subsequent steps in the vending process of Fig. 7. At step 200, the characteristic vending machine control input signal is sent to the specific vending machine needed to vend the requested product. In response to the characteristic vending machine control input signal the product is either successfully vended at step 210, or possibly due to an error at the vending machine, or if the vending machine is out of stock, it is not vended at step 220.

If the product is successfully vended, at step 230, a characteristic vending machine control output signal encoding an indication that the product has been successfully dispensed is sent from the vending machine to the adaptive vending machine communications interface. Alternatively, if the vend is unsuccessful, a characteristic vending machine control output signal encoding a confirmation indicating the product has not been successfully dispensed is sent from the vending machine to the adaptive vending machine communications interface at 240.

At step 250, the characteristic vending machine control output signal is converted to a standardised vending machine control output signal by the adaptive vending machine communications interface and sent onto the main vending control unit for processing. At step 260, the main vending control unit generates a standardised EPOS control input signal in response to the characteristic vending machine control output signal received. This standardised EPOS control input signal is sent from the main control unit to the adaptive EPOS communications interface, and at step 270, it is converted into a characteristic EPOS input signal which can be processed by the EPOS system that originally issued the vend request at step 130. Information received at the main vending control unit, including information relating to both successful and not successful vends is also transmitted for reporting purposes to a central hub computer at step 280.

If the signal at step 230 has encoded a confirmation that the vending machine has dispensed the product, the costs for the dispensed product are added to a customer invoice at step 290 by the EPOS system. The confirmation is also displayed on display means associated with the EPOS system. Alternatively, if the signal at step 230 encodes a failed vend confirmation, then, at step 300, the costs for the dispensed product are not added to a customer invoice and the operator is alerted to the fact the product was not dispensed by the vending machine.

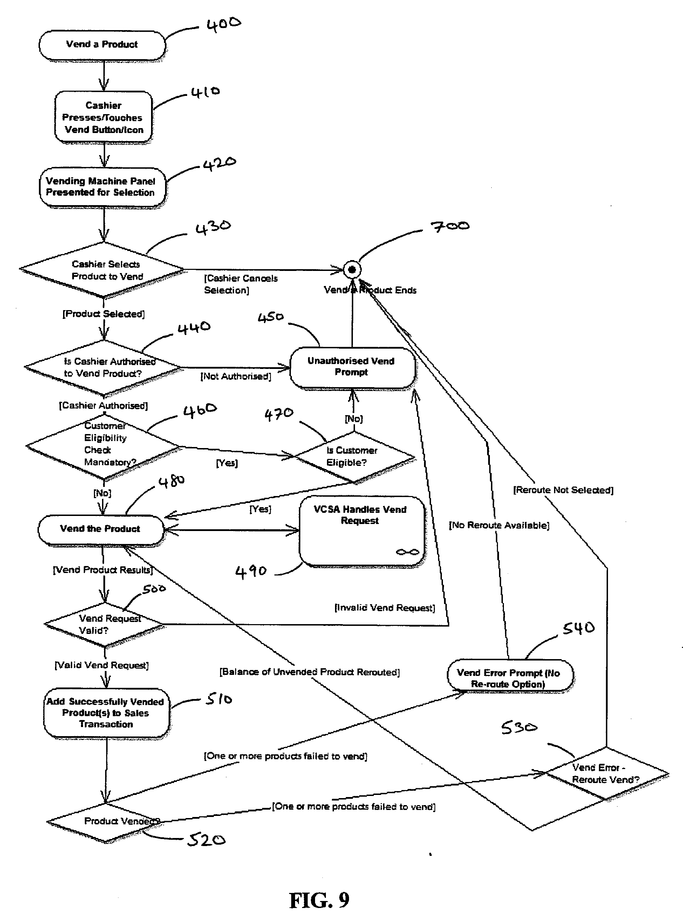

Fig. 9 is a further flow diagram showing the higher level steps in a process for vending a product according to the invention. At step 400, the customer requests a product which is available from a vending machine in an outlet. At step 410, the operator/cashier touches or presses a vend button or icon representing that product on the EPOS system. At step 420, a product selection panel is rendered on the vending machine from which an operator, at step 430, selects a product to vend. If the operator does not wish to proceed with the product vend then a cancellation may be made and the product vend process ends at step 700.

At step 440, a determination is made as to whether the operator is authorised to vend the product. If not, then, at step 450, an unauthorised to vend prompt is displayed on the EPOS system and the vend process ends at step 700. At step 460, a determination is made as to whether customer age verification functionality is required for purchase of the desired products. If verification is required then the customer age verification functionality is activated at step 470. If the customer is not eligible to purchase the goods, then the process returns to step 450 and an unauthorised to vend prompt is displayed on the EPOS system, and the vend process ends at step 700. Conversely, if verification is not required, or if the customer satisfies the customer age verification requirements, then the characteristic EPOS control output signal encoding a vend request instruction is transmitted at step 480 and the product is vended. The EPOS vending control apparatus handles the vend request at step 490.

A check is then made at step 500 as to whether the vend request was validly completed. If it was, then the cost of the vended product is added to the sales invoice at step 510. If it was not, then the process returns to step 450 and an unauthorised to vend prompt is displayed on the EPOS system, and the vend process ends at step 700. At step 520, if one or more products failed to vend, then a vend error prompt is displayed. A re-route option is provided at step 530 which provides that if a specific vending machine is unable to vend a requested product then a vend request for the requested product is directed to an alternative vending machine. Such a re-route option returns the process to step 480. If no re-route option is provided, as at step 540, then the vend process ends at step 700.

Aspects of the present invention have been described by way of example only and it should be appreciated that additions and/or modifications may be made thereto without departing from the scope thereof as defined in the appended claims.

## Claims

1. An electronic point of sales (EPOS) vending control apparatus (20) for connecting different types of electronic point of sales systems (22) with different types of vending machines (24) and enabling the or each vending machine (24) to be controlled from the EPOS systems (22), each type of EPOS system (22) and vending machine (24) having characteristic control inputs,
the control apparatus (20) comprises a main vending control unit (26) connected to at least one vending machine (24) and at least one EPOS system (22) by a communications link for the transmission of characteristic EPOS control input signals for controlling the EPOS system (22) and characteristic vending machine control input signals for controlling the vending machine (24) from the EPOS system (22),
the control apparatus (20) operating an adaptive EPOS communications interface (32) for translating standardised EPOS control input signals transmitted from the main vending control unit (26) into characteristic EPOS control input signals for transmission to the EPOS system (22), and an adaptive vending machine communications interface (36) for converting standardised vending machine control inputs signals transmitted from the main vending control unit (26) into characteristic vending machine control input signals for transmission to the vending machine (24),
instructions for a vending machine to dispense a product for a transaction are inputted by an operator to the EPOS system (22) and encoded into a vend request which is transmitted as a characteristic EPOS control output signal from the EPOS system (22) connected to the control apparatus (20), and the adaptive EPOS communications interface (32) is configured to translate the characteristic EPOS control output signals transmitted from the EPOS system (22) into standardised EPOS control output signals for processing by the main vending control unit (26), and
the adaptive vending machine communications interface (36) is configured to translate characteristic vending machine control output signals transmitted from the vending machine (24) into standardised vending machine control output signals for processing by the main vending control unit (26),
the adaptive communications interfaces (32,36) each comprise means for extracting point of sales terminal data and/or vending machine data from the characteristic EPOS control output signals received from the EPOS systems (22) and/or the characteristic vending machine control output signals received from vending machines (24) coupled to the control apparatus (20), the point of sales data and vending machine data includes data relating to transactions including both products vended from a vending machine (24) and other non-vended products in a transaction,
the extracted point of sales device data and/or vending machine data is transmitted to the main vending control unit (26) which is connected to at least one hub computer (58) via a further communications link for the transmission of the point of the sales data and vending machine data,
each EPOS system (22) operates a vending machine control application which provides an interactive interface on the EPOS system (22) from which an operator selects a product to be dispensed from a vending machine (24), and an icon representing the or each vending machine (24) which is able to receive a vending instruction from an EPOS system (22) is displayed on display means of the EPOS system (22),
whereby, the characteristic vending machine control input signals transmitted to the vending machine (24) encode an instruction to the vending machine (24) to dispense the product in the vend request inputted to the EPOS system (22) by the operator, the vending machine (24) processing the characteristic vending machine control input signals and dispensing the product, and ,
before a cost for the product vended from the vending machine (24) is added to a customer invoice the EPOS system (22) must receive a characteristic EPOS control input signal from the adaptive EPOS communication interface (32) of the control appparatus encoding a confirmation that the vending machine (24) has dispensed the product, and in which when the confirmation is received it is rendered on display means associated with the EPOS system (22), and if the vending machine has not dispensed the product, the cost for the product is not added to the customer invoice and the operator is alerted that the product was not dispensed.

2. An electronic point of sales (EPOS) vending control apparatus (20) as claimed in
Claim 1, in which the main vending control unit (26) is connected to a database of interface control programs (56),
some of the interface control programs (56), when executed on the adaptive EPOS communications interface (32), provide functionality required to generate characteristic EPOS control input signals and to process characteristic EPOS control output signals for an EPOS system (22), and
others of said interface control programs (56), when executed on the vending machine communications interface (36), provide functionality required to generate characteristic vending machine control input signals and to process characteristic vending machine control output signals for a vending machine (24).

3. An electronic point of sales (EPOS) vending control apparatus (20) as claimed in Claim 2, in which associated with the database of interface control programs (56) is an EPOS configuration file which stores configuration parameters which are provided as input to the interface control programs (56), and
the interface control programs (56) are arranged in the database in a dynamic linked library structure.

4. An electronic point of sales (EPOS) vending control apparatus (20) as claimed in Claim 2 or Claim 3, in which the EPOS vending control apparatus (20) further comprises means for sampling characteristic EPOS control output signals for an EPOS system (22) on connection to the EPOS vending control apparatus (20), and means for extracting EPOS system (22) identification parameters from the sampled EPOS signals, and
in which the EPOS vending control apparatus (20) uses the EPOS system (22) identification parameters to select and write an interface control program to the adaptive EPOS communications interface (32) to facilitate processing of characteristic EPOS control output signals received from the EPOS system (22) and generating characteristic EPOS control input signals for the EPOS system (22).

5. An electronic point of sales (EPOS) vending control apparatus (20) as claimed in any one of Claims 2 to 4, in which the EPOS vending control apparatus (20) further comprises means for sampling characteristic vending machine control output signals for a vending machine (24) on connection to the EPOS vending control apparatus (20), and means for extracting vending machine identification parameters from the sampled vending machine signals, and
in which the EPOS vending control apparatus (20) uses the vending machine identification parameters to select and write an interface control program to the adaptive vending machine communications interface (36) to facilitate processing of characteristic vending machine control output signals received from the vending machine (24) and generating characteristic vending machine control input signals for processing by the vending machine (24).

6. An electronic point of sales (EPOS) vending control apparatus (20) as claimed in any one of the preceding claims, in which the adaptive EPOS communications interface (32) and the adaptive vending machine communications interface (36) are stored in the control apparatus (20),
the point of sales data and vending machine data transmitted from the main vending control unit (26) is time and/or date stamped according to the time and date of the transaction, and
in which the hub computer (58) is able to process the point of sales data and vending machine data into reports detailing sales activity and/or the dispensing activity of one or more vending machines (24).

7. An electronic point of sales (EPOS) vending control apparatus (20) as claimed in any one of the preceding claims, in which an operator must input authentication information to an EPOS system (22) in order to operate and gain access to the functionality of the EPOS system (22),
authentication of an operator involves the operator inputting a password into a login or verification routine running on an EPOS system (22),
passing a swipe card through a reader associated with the EPOS system (22), whereby the required verification information is obtainable from the swipe card by the reader and then transmitted to the EPOS system (22), or
involves the use of biometric methods including finger print readers or iris scanning technologies.

8. An electronic point of sales (EPOS) vending control apparatus (20) as claimed in any one of the preceding claims, in which a vend request for a requested product is directed to an alternative vending machine (24) to dispense the requested product when a specific vending machine (24) is unable to vend the requested product.

9. An electronic point of sales (EPOS) vending control apparatus (20) as claimed in any one of the preceding claims, in which the EPOS system (22) comprises a touch screen and the interactive interface is icon based, each product able to be dispensed from the vending machine (24) being represented as an icon on the touch screen, and
in which the touch screen associated with an EPOS system (22) is able to be configured with all information corresponding to the layout of columns and slots in a vending machine (24).

10. An electronic point of sales (EPOS) vending control apparatus (20) as claimed in any one of the preceding claims, in which each EPOS system (22) comprises a keyboard and each product is able to be dispensed from the vending machine (24) by pressing a predefined key on the keyboard.

11. An electronic point of sales (EPOS) vending control apparatus (20) as claimed in any preceding claim, in which a vend from a vending machine (24) is recorded against an operator authenticated to the EPOS system (22), and
in which the EPOS system (22) comprises customer age verification functionality in the form of a visual prompt on the display means associated with the EPOS system (22), the prompt instructing the operator to request a customer to produce age verification.

12. An electronic point of sales (EPOS) vending control apparatus (20) as claimed in any of Claims 1 to 10, in which the EPOS system (22) comprises customer age verification functionality involving scanning a card encoding the age of the customer, and
the EPOS system (22) is adapted to store details relating to age verification of a customer.

13. An electronic point of sales (EPOS) vending control apparatus (20) as claimed in any preceding claim, in which each EPOS system (22) maintains a personal details database comprising personal details of each operator, whereby access to functionality on each EPOS system (22) needed to vend specific products from a vending machine (24) is controllable according to personal details of the operator in the database,
and in which the main control unit (26) receives data relating to all vended products once they have been dispensed from a vending machine (24).

14. An electronic point of sales (EPOS) vending control apparatus (20) as claimed in any preceding claim, in which the main vending control unit (26) comprises means to transmit alerts in response to signals received from a vending machine (24) indicating that levels of product remaining in the vending machine (24) are below a minimum specified level,
and the alerts are in the form of a prompt on an EPOS system (22), a simple messaging service (SMS) text message and/or an e-mail message.

15. An electronic point of sales (EPOS) vending control apparatus (20) as claimed in any preceding claim, in which the main vending control unit (26) is adapted to transmit status information to a web-server to facilitate online remote monitoring of vending machines (24) in a single or in multiple locations, and
in which touch panels associated with an EPOS system (22) are configurable to present a graphical representations corresponding to the physical layout of products in the vending machine (24).

## Patentansprüche

1. Verkaufssteuergerät (20) eines elektronischen Verkaufspunkts (EPOS) um verschiedene Arten von elektronischen Verkaufspunkt-Systemen (22) mit verschiedenen Arten von Verkaufsmaschinen (24) zu verbinden und zu ermöglichen, dass die oder jede Verkaufsmaschine (24) von jedem EPOS-System (22) gesteuert wird, wobei jede Art von EPOS-System (22) und Verkaufsmaschine (24) charakteristischen Steuereingaben aufweist,
wobei das Steuergerät (20) eine Haupt-Verkaufskontrolleinheit (26) umfasst, die mit mindestens einer Verkaufsmaschine (24) und mindestens einem EPOS-System (22) durch eine Kommunikationsverknüpfung verbunden ist für die Übertragung von charakteristischen EPOS-Steuereingabesignalen für die Steuerung des EPOS-Systems (22) und charakteristischen Verkaufsmaschinen-Steuereingabesignalen für die Steuerung der Verkaufsmaschine (24) vom EPOS-System (22),
wobei das Steuergerät (20) eine adaptive EPOS-Kommunikationsschnittstelle (32) betätigt, um standardisierte EPOS-Steuereingabesignale, die von der Haupt-Verkaufssteuereinheit (26) übertragen werden, in charakteristische EPOS-Steuereingabesignale für die Übertragung an das EPOS-System (22) zu übersetzen, und eine adaptive Verkaufsmaschinen-Kommunikationsschnittstelle (36), um die standardisierten Verkaufsmaschinen-Steuereingangssignale, die von der Haupt-Verkaufssteuereinheit (26) übertragen werden, in charakteristische Verkaufsmaschinen-Steuereingabesignale für die Übertragung an die Verkaufsmaschine (24) umzuwandeln,
Anweisungen für eine Verkaufsmaschine, um ein Produkt für eine Transaktion abzugeben, werden von einem Bediener in das EPOS-System (22) eingegeben, und in eine Verkaufsanfrage codiert, die als ein charakteristisches EPOS-Steuerausgabesignal vom EPOS-System (22) übertragen wird, das mit dem Steuergerät (20) verbunden ist, und die adaptive EPOS-Kommunikationsschnittstelle (32) ist konfiguriert, um die charakteristischen EPOS-Steuerausgabesignale, die vom EPOS-System (22) übertragen werden, in standardisierte EPOS-Steuerausgabesignale zur Verarbeitung durch die Haupt-Verkaufssteuereinheit (26) zu übersetzen; und
die adaptive Verkaufsmaschinen-Kommunikationsschnittstelle (36) ist konfiguriert, um charakteristische Verkaufsmaschinen-Steuerausgabesignale, die von der Verkaufsmaschine (24) übertragen werden, in standardisierte Verkaufsmaschinen-Steuerausgabesignale zur Verarbeitung durch die Haupt-Verkaufssteuereinheit (26) zu übersetzen,
die adaptiven Kommunikationsschnittstellen (32, 36) umfassen jeweils Mittel, um Verkaufspunktendgerät-Daten und/oder Verkaufsmaschinen-Daten von den charakteristischen EPOS-Steuerausgabesignalen, die von den EPOS-Systemen (22) erhalten werden, und/oder die charakteristischen Verkaufsmaschinen-Steuerausgabesignale, die von den Verkaufsmaschinen (24) erhalten werden, gekoppelt mit dem Steuergerät (20), zu extrahieren, wobei die Verkaufspunktdaten und die Verkaufsmaschinendaten Daten umfassen, die sich auf Transaktionen beziehen, die sowohl Produkte, die von einer Verkaufsmaschine (24) verkauft werden, als auch andere nicht verkaufte Produkte in einer Transaktion umfassen,
die extrahierten Daten der Verkaufspunktvorrichtung und/oder Daten der Verkaufsmaschine werden an die Haupt-Verkaufssteuereinheit (26), die mit mindestens einem Netzwerk-Computer (58) verbunden ist, über eine weitere Kommunikations-Verknüpfung für die Übertragung der Verkaufspunkt-Daten und Verkaufsmaschinen-Daten übertragen,
jedes EPOS-System (22) betätigt eine Verkaufsmaschinen-Steueranwendung, die eine interaktive Schnittstelle auf dem EPOS-System (22) bereitstellt, von der ein Bediener ein Produkt auswählt, um von eine Verkaufsmaschine (24) abgegeben zu werden, und ein Symbol, das die oder jede Verkaufsmaschine (24) darstellt, das dazu in der Lage ist, eine Verkaufsanweisung von einem EPOS-System (22) zu empfangen, wird auf einem Anzeigemittel des EPOS-Systems (22) angezeigt,
wodurch die charakteristischen Steuereingabesignale der Verkaufsmaschine, die an die Verkaufsmaschine (24) übertragen werden, eine Anweisung an die Verkaufsmaschine (24) codieren, um das Produkt in der Verkaufsanfrage, die vom Bediener in das EPOS-System (22) eingegeben wurde, abzugeben, wobei die Verkaufsmaschine (24) die charakteristischen Steuereingabesignale der Verkaufsmaschine verarbeitet und das Produkt abgibt, und
bevor Kosten für das Produkt, das von der Verkaufsmaschine (24) verkauft wurde, der Kundenrechnung hinzugefügt werden, muss das EPOS-System (22) ein charakteristisches EPOS-Steuereingabesignal von einer adaptiven EPOS-Kommunikationsschnittstelle (32) vom Steuergerät erhalten, das eine Bestätigung codiert, dass die Verkaufsmaschine (24) das Produkt abgegeben hat, und in der, wenn die Bestätigung erhalten wird, sie auf Anzeigemitteln wiedergegeben wird, die mit dem EPOS-System (22) assoziiert sind, und wenn die Verkaufsmaschine das Produkt nicht abgegeben hat, werden die Kosten für das Produkt der Kundenrechnung nicht hinzugefügt, und der Bediener wird darauf aufmerksam gemacht, dass das Produkt nicht abgegeben wurde.

2. Verkaufssteuergerät (20) eines elektronischen Verkaufspunkts (EPOS) nach Anspruch 1, wobei die Haupt-Verkaufssteuereinheit (26) mit einer Datenbank von Schnittstellen-Steuerprogrammen (56) verbunden ist,
wobei einige der Schnittstellen-Steuerprogramme (56), wenn sie auf der adaptiven EPOS-Kommunikationsschnittstelle (32) durchgeführt werden, eine Funktion bereitstellen, die erforderlich ist, um charakteristische EPOS-Steuereingabesignale zu erzeugen um charakteristische EPOS-Steuerausgabesignale für ein EPOS-System (22) zu verarbeiten, und
andere der Schnittstellen-Steuerprogramme (56), wenn sie auf der Kommunikationsschnittstelle (36) der Verkaufsmaschine durchgeführt werden, eine Funktion bereitstellen, die erforderlich ist, um charakteristische Verkaufsmaschinen-Steuereingabesignale zu erzeugen und charakteristische Verkaufsmaschinen-Steuerausgabesignale für eine Verkaufsmaschine (24) zu verarbeiten.

3. Verkaufssteuergerät (20) eines elektronischen Verkaufspunkts (EPOS) nach Anspruch 2 wobei mit der Datenbank von Schnittstellensteuerprogrammen (56) eine EPOS-Konfigurationsdatei assoziiert ist, die Konfigurationsparameter speichert, die als Eingabe den Schnittstellensteuerprogrammen (56) bereitgestellt werden, und
die Schnittstellen-Steuerprogramme (56) in der Datenbank in einer dynamischen verknüpften Bibliotheksstruktur angeordnet sind.

4. Verkaufssteuergerät (2) eines elektronischen Verkaufspunkts (EPOS) nach Anspruch 2 oder Anspruch 3, wobei das EPOS-Verkaufssteuergerät (20) weiter Mittel umfasst, um charakteristische EPOS-Steuerausgabesignale für ein EPOS-System (22) in Verbindung mit dem EPOS-Verkaufssteuergerät (20) probezuentnehmen, und Mittel, um EPOS-System (22)-Identifikationsparameter von den probeentnommenen EPOS-Signalen zu extrahieren, und
wobei das EPOS-Verkaufssteuergerät (20) die EPOS-System (22)-Identifikationsparamerter verwendet, um ein Schnittstellensteuerprogramm für die adaptive EPOS-Kommunikationsschnittstelle (32) auszuwählen und zu schreiben, um die Verarbeitung von charakteristischen EPOS-Steuerausgabesignalen zu erleichtern, die vom EPOS-System (22) erhalten werden, und charakteristische EPOS-Steuereingabesignale für das EPOS-System (22) zu erzeugen.

5. Verkaufssteuergerät (2) eines elektronischen Verkaufspunkts (EPOS) nach Anspruch 2 bis 4, wobei das EPOS-Verkaufssteuergerät (20) weiter Mittel umfasst, um charakteristische Verkaufsmaschinen-Steuerausgabesignale für eine Verkaufsmaschine (24) in Verbindung mit dem EPOS-Verkaufssteuergerät (20) probezuentnehmen, und Mittel, um Verkaufsmaschinen-Identifikationsparameter von den probeentnommenen Verkaufmaschinensignalen zu extrahieren, und
wobei das EPOS-Verkaufssteuergerät (20) die Verkaufsmaschinen-Identifikationsparameter verwendet, um ein Schnittstellensteuerprogramm für die adaptive Verkaufsmaschinen-Kommunikationsschnittstelle (36) auszuwählen und zu schreiben, um die Verarbeitung von charakteristischen Verkaufsmaschinen-Steuerausgabesignalen zu erleichtern, die von der Verkaufsmaschine (24) erhalten werden, und charakteristische Verkaufsmaschinen-Steuereingabesignale zur Verarbeitung durch die Verkaufsmaschine (24) zu erzeugen.

6. Verkaufssteuergerät (20) eines elektronischen Verkaufspunkts (EPOS) nach einem der vorhergehenden Ansprüche, wobei die adaptive EPOS-Kommunikationsschnittstelle (32) und die adaptive Verkaufsmaschinen-Kommunikationsschnittstelle (36) im Steuergerät (20) gespeichert werden, bei den Verkaufspunktdaten und den Verkaufsmaschinendaten Daten, die von der Haupt-Verkaufssteuereinheit (26) übertragen werden, handelt es sich um die Zeit und/oder das Datum, das gemäß der Zeit und dem Datum der Transaktion gestempelt ist, und
wobei der Netzwerk-Computer (58) dazu in der Lage ist, die Verkaufspunktdaten und die Verkaufsmaschinendaten in Berichte zu verarbeiten, die die Verkaufsaktivität und/oder die Abgabeaktivität von einer oder von mehreren Verkaufsmaschinen (24) detailliert.

7. Verkaufssteuergerät (20) eines elektronischen Verkaufspunkts (EPOS) nach einem der vorhergehenden Ansprüche, wobei ein Bediener Authentifizierungsinformation in ein EPOS-System (22) eingeben muss, um die Funktion des EPOS-Systems (22) zu betreiben und Zugang darauf zu erhalten,
wobei die Authentifizierung eines Bedieners umfasst, dass der Bediener ein Passwort in eine Anmelde- oder Überprüfungs-Routine eingibt, die auf einem EPOS-System (22) läuft,
Einführung einer Lesekarte in ein Lesegerät, das mit dem EPOS-System (22) assoziiert ist, wobei die erforderliche Überprüfungsinformation von der Lesekarte durch ein Lesegerät erhalten werden kann und dann an das EPOS-System (22) übertragen wird, oder
die Verwendung von biometrischen Verfahren umfasst, darin eingeschlossen Fingerabdruck-Leser oder Iris-Scan-Technologien.

8. Verkaufssteuergerät (20) eines elektronischen Verkaufspunkts (EPOS) nach einem der vorhergehenden Ansprüche, wobei eine Verkaufsanfrage für ein angefragtes Produkt an eine alternative Verkaufmaschine (24) gerichtet wird, um das angefragte Produkt abzugeben, wenn eine spezifische Verkaufsmaschine (24) nicht dazu in der Lage ist, das angefragte Produkt zu verkaufen.

9. Verkaufssteuergerät (20) eines elektronischen Verkaufspunkts (EPOS) nach einem der vorhergehenden Ansprüche, wobei das EPOS-System (22) einen Sensorbildschirm umfasst und die interaktive Schnittstelle Symbol-basiert ist, wobei jedes Produkt, das von der Verkaufsmaschine (24) abgegeben werden kann, als ein Symbol auf dem Sensorbildschirm dargestellt wird, und
wobei der Sensorbildschirm, der mit einem EPOS-System (22) assoziiert ist, mit der gesamten Information konfiguriert werden kann, die der Anordnung der Säulen und der Schlitze in einer Verkaufsmaschine (24) entspricht.

10. Verkaufssteuergerät (20) eines elektronischen Verkaufspunkts (EPOS) nach einem der vorhergehenden Ansprüche, wobei jedes EPOS-System (22) eine Tastatur umfasst, und jedes Produkt von der Verkaufsmaschine (24) abgegeben werden kann, indem eine Taste auf einer vordefinierten Tastatur gedrückt wird.

11. Verkaufssteuergerät (20) eines elektronischen Verkaufspunkts (EPOS) nach einem der vorhergehenden Ansprüche, wobei ein Verkauf von einer Verkaufsmaschine (24) gegen einen Bediener aufgezeichnet wird, der für das EPOS-System (22) authentifiziert ist, und
wobei das EPOS-System (22) .eine Funktion zur Überprüfung des Alters des Kunden in Form einer visuellen Eingabeaufforderung umfasst, die mit dem EPOS-System (22) assoziiert ist, wobei die Eingabeaufforderung den Bediener anweist, einen Kunden aufzufordern, eine Altersverifikation vorzuweisen.

12. Verkaufssteuergerät (20) eines elektronischen Verkaufspunkts (EPOS) nach Anspruch 1 bis 10, wobei das EPOS-System (22) eine Funktion zur Überprüfung des Alters des Kunden umfasst, die das Scannen einer Karte umfasst, die das Alter des Kunden kodiert, und
das EPOS-System (22) ausgelegt ist, um Details zu speichern, die sich auf die Altersverifizierung eines Kunden beziehen.

13. Verkaufssteuergerät (20) eines elektronischen Verkaufspunkts (EPOS) nach einem der vorhergehenden Ansprüche, wobei jedes EPOS-System (22) eine Datenbank mit persönlichen Details pflegt, umfassend persönliche Details jedes Bedieners wobei der Zugang zur Funktion auf jedem EPOS-System (22) die erforderlich ist, um spezifische Produkte von einer Verkaufsmaschine (24) zu verkaufen, gemäß den persönlichen Details in der Datenbank gesteuert werden kann,
und wobei die Haupt-Steuereinheit (26) Daten empfängt, die sich auf alle verkauften Produkte beziehen, nachdem sie von einer Verkaufsmaschine (24) abgegeben wurden.

14. Verkaufssteuergerät (20) eines elektronischen Verkaufspunkts (EPOS) nach einem der vorhergehenden Ansprüche, wobei die Haupt-Verkaufssteuereinheit (26) Mittel umfasst, um Warnungen in Antwort auf Signale zu übertragen, die von einer Verkaufsmaschine (24) erhalten werden und angeben, dass die Mengen von Produkten, die in der Verkaufsmaschine (24) verbleiben, unter einer minimalen spezifizierten Menge liegen,
und die Warnungen liegen in der Form einer Eingabeaufforderung in EPOS-System (22), einer Kurznachrichtendienst (SMS)-Textmeldung, und/oder einer E-Mail-Meldung vor.

15. Verkaufssteuergerät (20) eines elektronischen Verkaufspunkts (EPOS) nach einem der vorhergehenden Ansprüche, wobei die Haupt-Verkaufssteuereinheit (26) ausgelegt ist, um Status-Informationen an einen Netz-Server zu übertragen, um die Online-Femüberwachung der Verkaufsmaschine (24) an einem einzigen oder an mehreren Standorten zu erleichtern, und
wobei die Sensorbildschirm-Paneele, die mit einem EPOS-System (22) assoziiert sind, konfiguriert werden können, um grafische Darstellungen aufzuweisen, die dem physischen Aussehen der Produkte in der Verkaufsmaschine (24) entsprechen.

## Revendications

1. Appareil de commande de distributeurs automatiques et de terminaux de paiement électronique (EPOS) (20) destiné à connecter différents types de systèmes de terminaux de paiement électronique (22) à différents types de distributeurs automatiques (24) et permettant au ou à chaque distributeur automatique (24) d'être commandé à partir des systèmes de terminaux EPOS (22), chaque type de système de terminaux EPOS (22) et de distributeur automatique (24) présentant des entrées de commande caractéristiques ;
l'appareil de commande (20) comprend une unité de commande de vente principale (26) connectée à au moins un distributeur automatique (24) et à au moins un système de terminaux EPOS (22) par une liaison de communication en vue de la transmission de signaux d'entrée de commande de terminaux EPOS caractéristiques destinés à commander le système de terminaux EPOS (22), et de signaux d'entrée de commande de distributeurs automatiques caractéristiques destinés à commander le distributeur automatique (24) à partir du système de terminaux EPOS (22) ;
l'appareil de commande (20) exploitant une interface de communication de terminaux EPOS adaptative (32) destinée à convertir des signaux d'entrée de commande de terminaux EPOS normalisés transmis à partir de l'unité de commande de vente principale (26) en des signaux d'entrée de commande de terminaux EPOS caractéristiques destinés à être transmis au système de terminaux EPOS (22), et une interface de communication de distributeurs automatiques adaptative (36) destinée à convertir des signaux d'entrée de commande de distributeurs automatiques normalisés transmis à partir de l'unité de commande de vente principale (26) en des signaux d'entrée de commande de distributeurs automatiques caractéristiques destinés à être transmis au distributeur automatique (24) ;
des instructions invitant un distributeur automatique à distribuer un produit dans le cadre d'une transaction sont saisies par un opérateur sur le système de terminaux EPOS (22), et sont codées dans une demande de vente qui est transmise sous la forme d'un signal de sortie de commande de terminaux EPOS caractéristique à partir du système de terminaux EPOS (22) connecté à l'appareil de commande (20), et l'interface de communication de terminaux EPOS adaptative (32) est configurée de manière à convertir les signaux de sortie de commande de terminaux EPOS caractéristiques transmis à partir du système de terminaux EPOS (22) en des signaux de sortie de commande de terminaux EPOS normalisés destinés à être traités par l'unité de commande de vente principale (26) ; et
l'interface de communication de distributeurs automatiques adaptative (36) est configurée de manière à convertir les signaux de sortie de commande de distributeurs automatiques caractéristiques transmis à partir du distributeur automatique (24) en des signaux de sortie de commande de distributeurs automatiques normalisés destinés à être traités par l'unité de commande de vente principale (26) ;
les interfaces de communication adaptatives (32, 36) comprennent chacune un moyen pour extraire des données de terminaux de paiement électronique et/ou des données de distributeurs automatiques des signaux de sortie de commande de terminaux EPOS caractéristiques reçus à partir des systèmes de terminaux EPOS (22) et/ou des signaux de sortie de commande de distributeurs automatiques caractéristiques reçus à partir des distributeurs automatiques (24) couplés à l'appareil de commande (20), les données de terminaux de paiement électronique et les données de distributeurs automatiques incluent des données relatives à des transactions incluant à la fois les produits distribués par un distributeur automatique (24) et d'autres produits non distribués au cours d'une transaction ;
les données de terminaux de paiement électronique extraites et/ou les données de distributeurs automatiques extraites sont transmises à l'unité de commande de vente principale (26) qui est connectée à au moins un ordinateur de supervision (58) par l'intermédiaire d'une liaison de communication supplémentaire, en vue de la transmission des données de terminaux de paiement électronique et des données de distributeurs automatiques ;
chaque système de terminaux EPOS (22) exploite une application de commande de distributeur automatique qui fournit une interface interactive sur le système de terminaux EPOS (22) à partir duquel un opérateur sélectionne un produit à distribuer à partir d'un distributeur automatique (24), et une icône, représentant le ou chaque distributeur automatique (24) qui est apte à recevoir une instruction de distribution en provenance d'un système de terminaux EPOS (22), est affichée sur un moyen d'affichage du système de terminaux EPOS (22) ;
moyennant quoi, les signaux d'entrée de commande de distributeurs automatiques caractéristiques transmis au distributeur automatique (24) codent une instruction invitant le distributeur automatique (24) à distribuer le produit lors de la demande de vente saisie sur le système de terminaux EPOS (22) par l'opérateur, le distributeur automatique (24) traitant les signaux d'entrée de commande de distributeurs automatiques caractéristiques et distribuant le produit ; et
avant qu'un coût afférent au produit distribué à partir du distributeur automatique (24) ne soit ajouté à une facture client, le système de terminaux EPOS (22) doit recevoir un signal d'entrée de commande de terminaux EPOS caractéristique, à partir de l'interface de communication de terminaux EPOS adaptative (32) de l'appareil de commande, codant une confirmation selon laquelle le distributeur automatique (24) a distribué le produit, et dans lequel, lorsque la confirmation est reçue, elle est affichée sur le moyen d'affichage associé au système de terminaux EPOS (22), et si le distributeur automatique n'a pas distribué le produit, le coût afférent au produit n'est pas ajouté à la facture client et l'opérateur est averti que le produit n'a pas été distribué.

2. Appareil de commande de distributeurs automatiques et de terminaux de paiement électronique (EPOS) (20) selon la revendication 1, dans lequel l'unité de commande de vente principale (26) est connectée à une base de données de programmes de commande d'interface (56) ;
certains des programmes de commande d'interface (56), lorsqu'ils sont exécutés sur l'interface de communication de terminaux EPOS adaptative (32), fournissent une fonctionnalité requise en vue de générer des signaux d'entrée de commande de terminaux EPOS caractéristiques et de traiter des signaux de sortie de commande de terminaux EPOS caractéristiques pour un système de terminaux EPOS (22) ; et
d'autres programmes parmi lesdits programmes de commande d'interface (56), lorsqu'ils sont exécutés sur l'interface de communication de distributeurs automatiques (36), fournissent une fonctionnalité requise en vue de générer des signaux d'entrée de commande de distributeurs automatiques caractéristiques et de traiter des signaux de sortie de commande de distributeurs automatiques caractéristiques pour un distributeur automatique (24).

3. Appareil de commande de distributeurs automatiques et de terminaux de paiement électronique (EPOS) (20) selon la revendication 2, dans lequel est associé à la base de données de programmes de commande d'interface (56) un fichier de configuration de terminaux EPOS qui stocke des paramètres de configuration qui sont fournis en tant qu'entrée sur les programmes de commande d'interface (56) ; et
les programmes de commande d'interface (56) sont agencés dans la base de données dans une structure de bibliothèque liée dynamique.

4. Appareil de commande de distributeurs automatiques et de terminaux de paiement électronique (EPOS) (20) selon la revendication 2 ou 3, dans lequel l'appareil de commande de distributeurs et terminaux EPOS (20) comprend en outre un moyen pour échantillonner des signaux de sortie de commande de terminaux EPOS caractéristiques pour un système de terminaux EPOS (22) lors d'une connexion à l'appareil de commande de distributeurs et terminaux EPOS (20), et un moyen pour extraire des paramètres d'identification de système de terminaux EPOS (22) des signaux de terminaux EPOS échantillonnés ; et
dans lequel l'appareil de commande de distributeurs et terminaux EPOS (20) utilise les paramètres d'identification de système de terminaux EPOS (22) en vue de sélectionner et d'écrire un programme de commande d'interface sur l'interface de communication de terminaux EPOS adaptative (32), destiné à faciliter le traitement de signaux de sortie de commande de terminaux EPOS caractéristiques reçus à partir du système de terminaux EPOS (22) et à générer des signaux d'entrée de commande de terminaux EPOS caractéristiques pour le système de terminaux EPOS (22).

5. Appareil de commande de distributeurs automatiques et de terminaux de paiement électronique (EPOS) (20) selon l'une quelconque des revendications 2 à 4, dans lequel l'appareil de commande de distributeurs et terminaux EPOS (20) comprend en outre un moyen pour échantillonner des signaux de sortie de commande de distributeurs automatiques caractéristiques pour un distributeur automatique (24) lors d'une connexion à l'appareil de commande de distributeurs et terminaux EPOS (20), et un moyen pour extraire des paramètres d'identification de distributeurs automatiques des signaux de distributeurs automatiques échantillonnés ; et
dans lequel l'appareil de commande de distributeurs et terminaux EPOS (20) utilise les paramètres d'identification de distributeurs automatiques en vue de sélectionner et d'écrire un programme de commande d'interface sur l'interface de communication de distributeurs automatiques adaptative (36), destiné à faciliter le traitement de signaux de sortie de commande de distributeurs automatiques caractéristiques reçus à partir du distributeur automatique (24), et à générer des signaux d'entrée de commande de distributeurs automatiques caractéristiques destinés à être traités par le distributeur automatique (24).

6. Appareil de commande de distributeurs automatiques et de terminaux de paiement électronique (EPOS) (20) selon l'une quelconque des revendications précédentes, dans lequel l'interface de communication de terminaux EPOS adaptative (32) et l'interface de communication de distributeurs automatiques adaptative (36) sont stockées dans l'appareil de commande (20) ;
les données de terminaux de paiement électronique et les données de distributeurs automatiques transmises à partir de l'unité de commande de vente principale (26) sont estampillées par heure et/ou par date en fonction de l'heure et de la date de la transaction ; et
dans lequel l'ordinateur de supervision (58) est apte à traiter les données de terminaux de paiement électronique et les données de distributeurs automatiques dans des rapports détaillant l'activité de vente et/ou l'activité de distribution d'un ou plusieurs distributeurs automatiques (24).

7. Appareil de commande de distributeurs automatiques et de terminaux de paiement électronique (EPOS) (20) selon l'une quelconque des revendications précédentes, dans lequel un opérateur doit saisir des informations d'authentification sur un système de terminaux EPOS (22) afin de pouvoir exploiter, et de pouvoir accéder à, la fonctionnalité du système de terminaux EPOS (22) ;
l'authentification d'un opérateur implique la saisie, par l'opérateur, d'un mot de passe, dans une routine de vérification ou de connexion exploitée sur un système de terminaux EPOS (22) ;
elle implique le passage d'une carte magnétique dans un lecteur associé au système de terminaux EPOS (22), moyennant quoi les informations de vérification requises peuvent être obtenues à partir de la carte magnétique par le lecteur, et transmises ensuite au système de terminaux EPOS (22) ; ou
elle implique l'utilisation de procédés biométriques incluant des lecteurs d'empreintes digitales ou des technologies de balayage d'iris.

8. Appareil de commande de distributeurs automatiques et de terminaux de paiement électronique (EPOS) (20) selon l'une quelconque des revendications précédentes, dans lequel une demande de vente pour un produit demandé est acheminée vers un distributeur automatique alternatif (24) afin qu'il distribue le produit demandé lorsqu'un distributeur automatique spécifique (24) n'est pas en mesure de distribuer ou vendre le produit demandé.

9. Appareil de commande de distributeurs automatiques et de terminaux de paiement électronique (EPOS) (20) selon l'une quelconque des revendications précédentes, dans lequel le système de terminaux EPOS (22) comprend un écran tactile et l'interface interactive est basée sur des icônes, chaque produit pouvant être distribué par le distributeur automatique (24) étant représenté sous la forme d'une icône sur l'écran tactile ; et
dans lequel l'écran tactile associé à un système de terminaux EPOS (22) est apte à être configuré avec toutes les informations correspondant à la disposition des colonnes et fentes dans un distributeur automatique (24).

10. Appareil de commande de distributeurs automatiques et de terminaux de paiement électronique (EPOS) (20) selon l'une quelconque des revendications précédentes, dans lequel chaque système de terminaux EPOS (22) comprend un clavier et chaque produit est apte à être distribué par le distributeur automatique (24) en appuyant sur une touche prédéfinie sur le clavier.

11. Appareil de commande de distributeurs automatiques et de terminaux de paiement électronique (EPOS) (20) selon l'une quelconque des revendications précédentes, dans lequel une vente effectuée par un distributeur automatique (24) est enregistrée relativement à un opérateur authentifié sur le système de terminaux EPOS (22) ; et
dans lequel le système de terminaux EPOS (22) comprend une fonction de vérification de l'âge du client sous la forme d'un message d'invite visuelle sur le moyen d'affichage associé au système de terminaux EPOS (22), le message invitant l'opérateur à demander à un client de produire un document permettant la vérification de son âge.

12. Appareil de commande de distributeurs automatiques et de terminaux de paiement électronique (EPOS) (20) selon l'une quelconque des revendications 1 à 10, dans lequel le système de terminaux EPOS (22) comprend une fonction de vérification de l'âge du client impliquant le balayage d'une carte codant l'âge du client ; et
le système de terminaux EPOS (22) est apte à stocker des informations relatives à la vérification de l'âge d'un client.

13. Appareil de commande de distributeurs automatiques et de terminaux de paiement électronique (EPOS) (20) selon l'une quelconque des revendications précédentes, dans lequel chaque système de terminaux EPOS (22) maintient une base de données d'informations personnelles comprenant des informations personnelles propres à chaque opérateur, moyennant quoi l'accès à une fonctionnalité, sur chaque système de terminaux EPOS (22), nécessaire à la vente de produits spécifiques par un distributeur automatique (24), peut être commandé selon les informations personnelles de l'opérateur dans la base de données ; et
dans lequel l'unité de commande principale (26) reçoit des données relatives à tous les produits vendus dès lors qu'ils ont été distribués par un distributeur automatique (24).

14. Appareil de commande de distributeurs automatiques et de terminaux de paiement électronique (EPOS) (20) selon l'une quelconque des revendications précédentes, dans lequel l'unité de commande de vente principale (26) comprend un moyen pour transmettre des alertes en réponse à des signaux reçus à partir d'un distributeur automatique (24) indiquant que les niveaux quantitatifs de produits restant dans le distributeur automatique (24) sont inférieurs à un niveau minimum spécifié ; et
les alertes sont sous la forme d'un message d'invite sur un système de terminaux EPOS (22), d'un service de minimessages (SMS) au format texte, et/ou d'un message électronique.

15. Appareil de commande de distributeurs automatiques et de terminaux de paiement électronique (EPOS) (20) selon l'une quelconque des revendications précédentes, dans lequel l'unité de commande de vente principale (26) est apte à transmettre des informations d'état à un serveur web afin de faciliter la surveillance à distance en ligne de distributeurs automatiques (24) dans un seul emplacement ou dans plusieurs emplacements ; et
dans lequel des panneaux tactiles associés à un système de terminaux EPOS (22) peuvent être configurés afin de présenter une représentation graphique correspondant à la disposition physique de produits dans le distributeur automatique (24).
